# EUROPÄISCHE PATENTSCHRIFT

(11) **EP 3 760 902 B1**
(45) Veröffentlichungstag und Bekanntmachung des Hinweises auf die Patenterteilung: **28.09.2022**
(21) Anmeldenummer: 20000219.4
(22) Anmeldetag: 19.06.2020
(51) Int. Cl.: F16L 3/12, F16L 41/12, F16L 41/14, F16L 41/08, E02F 9/08

(54) **ARMATURSICHERUNG FÜR HYDRAULIKSCHLAUCHKUPPLUNGEN, BAUMASCHINE UND VERFAHREN**
SAFETY LOCK FOR HYDRAULIC HOSE COUPLINGS, CONSTRUCTION MACHINE AND METHOD
FIXATION D'ARMATURE POUR RACCORDS DE TUYAUX HYDRAULIQUES, MACHINE DE CONSTRUCTION ET PROCÉDÉ

(30) Priorität: 02.07.2019 DE 102019004659
(43) Veröffentlichungstag der Anmeldung: 06.01.2021
(73) Patentinhaber: BOMAG GmbH, 56154 Boppard (DE)
(72) Erfinder: Grings, Werner, 56154 Boppard (DE)
(74) Vertreter: Heidler, Philipp

(56) Entgegenhaltungen:
- EP-A1- 0 665 333
- WO-A1-2014/210182
- DE-A1- 3 435 564
- DE-A1- 3 829 900
- US-A- 4 664 425

## Beschreibung

Die Erfindung betrifft eine Armatursicherung zur erleichterten Montage und Sicherung von Hydraulik-Schlauchkupplungen, insbesondere für Baumaschinen. Darüber hinaus betrifft die Erfindung ebenfalls eine Baumaschine, insbesondere einen Boden- oder Müllverdichter oder einen Stra-ßenfertiger, mit einer derartigen Armatursicherung. Schließlich betrifft die Erfindung auch ein Verfahren zur Herstellung einer Hydraulik Schlauchkupplung einer Baumaschine.

Bei der Montage von komplexen Hydrauliksystemen, wie sie beispielsweise typischerweise bei Baumaschinen vorkommen, müssen regelmäßig Hydraulikkomponenten, wie beispielsweise Hydraulikpumpen, Hydraulikaktuatoren, speziell Hydraulikmotoren und/oder Hydraulikzylinder, an unterschiedlichen Positionen der Maschinen miteinander über Schlauch- oder Rohrleitungen miteinander verbunden werden, beispielsweise zur fluidleitenden Verbindung einer Hydraulikpumpe mit einem Hydraulikaktuator. Dabei werden üblicherweise auch Maschinenteile miteinander verbunden, die sich im Arbeitsbetrieb relativ zueinander bewegen können. Ganz typisch ist dies beispielsweise beim Vorder- und Hinterwagen von knickgelenkten Baumaschinen der Fall und/oder bei Elementen, die auf einem relativ zu einem Maschinenrahmen verstellbaren Einrichtungen angeordnet sind, wie beispielsweise bei eine gegenüber einem Maschinenrahmen absenkbaren Fräswalze, einem Ausleger eines Baggers, einer Einbaubohle eines Straßenfertigers, einem Räumschild eines Müll- oder Erdverdichters etc. Zur Verbindung der Hydraulikkomponenten, insbesondere über relativ zueinander verstellbare Einheiten hinweg, werden typischerweise zumindest in begrenztem Umfang flexible Hydraulikschläuche eingesetzt. Durch die ihnen innewohnenden Flexibilität sind sie auch für die Verbindung von sich gegeneinander bewegenden Maschinenteilen geeignet.

Problematisch beim Einsatz solcher, insbesondere flexibler, Schlauchverbindungen sind häufig die Anschlussstellen des jeweiligen Schlauches an die jeweiligen Hydraulikkomponenten, an einen anderen Hydraulikschlauch etc. Diese Anschluss- oder Verbindungsstelen sind häufig für das Auftreten von Leckagen verantwortlich, beispielweise aufgrund mangelhafter Handhabungen im Fertigungsprozess. Um möglichst wenige potentielle Leckagestellen im Hydrauliksystem zu haben, werden daher üblicherweise möglichst durchgehende und damit vergleichsweise lange Hydraulikschläuche eingesetzt, die oftmals über lange Strecken in oder an der Maschine verlegt werden müssen. Diese werden aufgrund der räumlichen Zugänglichkeit oftmals schon früh im Montagevorgang einer solchen Baumaschine an einer Vormontage-Baugruppe, beispielsweise einer Antriebs- bzw. Motorbaugruppe, befestigt und müssen dann als Bündel schwerer, nur wenig biegsamer Hydraulikschläuche mit der Vormontage-Baugruppe mit bewegt werden. Da oftmals eine große Anzahl derartiger Hydraulikschläuche benötigt wird, ist die entsprechende Handhabung bei der Montage erschwert und umständlich.

Hinzu kommt, dass bei einer Beschädigung oder einem Verschleiß eines derartigen, langen Hydraulikschlauches auch der gesamte Schlauch ausgetauscht werden muss. Dies ist zum einen aufgrund der Zugänglichkeit der entsprechenden Anbindungen des Schlauches an dem Hydrauliksystem eine Herausforderung und zum anderen auch ein erhöhter Kostenaufwand, da auch unverschlissene Teile der langen Hydraulikschläuche entsorgt werden.

Typischerweise weisen Hydraulikschläuche an ihren Schlauchenden zu Anschluss- und/oder Verbindungszwecken sogenannte Armaturen auf. Mit "Armatur" wird vorliegend eine, typischerweise aus Metall gefertigte, Kupplung am Schlauchende des Hydraulikschlauches bezeichnet. Die Armatur weist üblicherweise eine Seite auf, an der sie fest und dicht mit dem Hydraulikschlauch verbunden, beispielsweise typischerweise verpresst, ist. Darüber hinaus umfasst die Armatur üblicherweise eine weitere Seite, die eine Kupplungseinrichtung für eine komplementär ausgebildete Armatur aufweist, die beispielsweise entweder an einem Hydrauliksystem oder an einem weiteren Hydraulikschlauch angeordnet sein kann. Ganz allgemein bildet die Armatur also den Abschluss des Hydraulikschlauches und bietet die Möglichkeit, diesen drucksicher und dicht an einer weiteren Armatur zu befestigen und die beiden Armaturen somit derart zu verbinden, dass die Hydraulikflüssigkeit aus dem Hydraulikschlauch durch die beiden Armaturen hindurch in einen weiteren Teil des Hydrauliksystems oder einen weiteren Hydraulikschlauch fließt. Derartige Armaturen von Hydraulikschläuchen sind im Stand der Technik bekannt.

Im Stand der Technik werden beispielsweise sogenannte Schottbleche oder Schottverschraubungen verwendet, die eine Schnittstelle für Hydraulikschläuche darstellen. Schottbleche sind beispielsweise als flächige Platten ausgebildet, in die doppelseitige Stutzen eingefügt sind, an denen sich jeweils ein Schlauchende eines Hydraulikschlauches ankuppeln lässt. Hierfür sind die Stutzen mit Gewinden und/oder Muttern, beispielsweise Überwurfmutter, sowie Dichtungen und gegebenenfalls Ventilen versehen, sodass das Schottblech insgesamt eine Halteeinrichtung mit einer Armaturaufnahme zur Aufnahme einer Armatur des jeweiligen Schlauchendes umfasst. Die Stutzen der Schottbleche erlauben es also, an beiden Seiten einen Hydraulikschlauch zu befestigen, beispielsweise anzuschrauben, die über den Stutzen in Fließverbindung stehen. Dadurch können beispielsweise andernfalls sehr lange Hydraulikschlauch-Verbindungen in zwei Anteile aufgeteilt werden, beispielsweise einen 1. Anteil von einer Hydraulikkomponente bis zum Schottblech und einen 2. Anteil vom Schottblech bis zu einer weiteren Hydraulikkomponente. Dadurch sind die verwendeten Hydraulikschläuche kürzer und bei der Montage handlicher. Darüber hinaus können Teilstücke bei Verschleiß separat ausgewechselt werden. Problematisch hieran ist allerdings, dass zwei Schraubverbindungen mit dem Schottblech notwendig sind, wodurch auch zwei potentielle Leckagestellen pro Hydraulikleitung in das System eingeführt werden. Darüber hinaus sind derartige Schottbleche mit den entsprechenden Stutzen vergleichsweise groß und brauchen daher viel Bauraum. Ein weiteres System zur Verbindung von zwei Schlauchenden über doppelseitige Stutzen ist in der DE 38 29 900 A1 offenbart. In der WO 2014/210182 A1 wird eine Verbindung einer Schlaucharmatur an einem Verteiler beschrieben. Die DE 34 35 564 A1 dagegen offenbart eine Armatursicherung gemäß dem Oberbegriff des Anspruchs 1 der vorliegenden Anmeldung.

Es ist vor diesem Hintergrund die Aufgabe der vorliegenden Erfindung, eine Möglichkeit anzugeben, wie die Montage der Hydraulikschläuche eines Hydrauliksystems erleichtert werden kann. Dabei sollen möglichst wenige potentielle Leckagestellen in das Hydrauliksystem eingeführt werden und gleichzeitig möglichst wenig Bauraum verwendet werden. Ein weiteres Ziel ist ferner, eine Möglichkeit anzugeben, wie anstelle durchgehender langer Hydraulikschläuche auch kürzere Hydraulikschläuche genutzt werden können, ohne dabei gleichzeitig das Leckagerisiko drastisch zu erhöhen.

Die Lösung dieser Aufgaben gelingt mit einer Armatursicherung, einer Baumaschine und einem Verfahren gemäß den unabhängigen Ansprüchen. Bevorzugte Weiterbildungen sind in den abhängigen Ansprüchen angegeben.

Dementsprechend wird erfindungsgemäß eine Armatursicherung zur erleichterten Montage und Sicherung von Hydraulikschlauchkupplungen, insbesondere für Baumaschinen, mit einer Halteeinrichtung, die eine Armaturaufnahme zur Aufnahme einer Armatur eines ersten Schlauchendes umfasst, bereitgestellt, wobei die Halteeinrichtung eine Verdrehsicherung aufweist, die eine Verdrehung der Armatur des ersten Schlauchendes um eine Durchflussachse in der Armaturaufnahme verhindert, wobei die Armatursicherung eine Axialsicherung aufweist, die eine Verschiebung der Armatur des ersten Schlauchendes entlang wenigstens einer Richtung der Durchflussachse in der Armaturaufnahme verhindert, und wobei die Armaturaufnahme die Halteeinrichtung derart durchdringt, dass eine Armatur eines zweiten Schlauchendes unmittelbar mit der Armatur des in der Armaturaufnahme gesicherten ersten Schlauchendes kuppelbar ist. Die Durchflussachse bezeichnet dabei diejenige Achse, entlang der ein Hydraulikfluid durch die Armatursicherung im Betrieb, d.h. bei angeschlossenen Schläuchen, hindurchfließt. Sie bezeichnet somit nichts anderes als die bestimmungsgemäße Hauptdurchströmungsrichtung des Hydraulikfluids durch die Armatursicherung im montierten Zustand.

Mit der erfindungsgemäßen Armatursicherung können erste und zweite Schlauchenden von Hydraulikschläuchen einer Baumaschine problemlos auf einfache Art und Weise miteinander gekoppelt und effektiv vor einem axialen und radialen Verschieben geschützt werden. Es ist darüber hinaus nicht notwendig, übermäßig lange Hydraulikschläuche zu verwenden, um entsprechende Verbindungen zu ermöglichen. Dies reduziert die Kosten und verbessert auch die Handhabung der Hydrauliksysteme. Durch die Verschiebesicherung in der Armatursicherung in Richtung der Durchflussachse kann die Armatur des ersten Schlauchendes zudem sicher in der Armatursicherung gehaltern werden und insbesondere auch am Schlauchende vormontiert und erst dann in die Armatursicherung eingeführt und dort gesichert gehalten werden. Durch die Verdrehsicherung wird die Anbindung der Armatur des zweiten Schlauendes direkt an die Armatur des ersten Schlauchendes erleichtert. Damit können die Armaturen des ersten und des zweiten Schlauchendes beide separat zur Armatursicherung vormontiert werden und anschließend über die Armatursicherung direkt miteinander verbunden werden, so dass insgesamt zur fluidleitenden Verbindung der beiden Schlauchenden über die Armatursicherung insgesamt nur eine Verbindungsstelle und damit auch nur eine abzudichtende Stelle enthalten ist.

Gemäß einer bevorzugten Ausführungsform ist die Armaturaufnahme als eine die Halteeinrichtung vollständig durchdringende Öffnung ausgebildet, und die Verdrehsicherung ist als diese Öffnung in Radialrichtung der Durchflussachse begrenzender Rand ausgebildet, der vorzugsweise vieleckig oder gewellt ausgebildet ist, und der mit der Armatur des ersten Schlauchendes wenigstens derart formschlüssig ineinander greift, dass eine Rotation der Armatur des ersten Schlauchendes in der Armaturaufnahme verhindert, insbesondere mechanisch blockiert, wird. Durch diese Konfiguration wird auf einfache und kostengünstige Weise ein Drehen der Schlauchenden in der Armaturaufnahme um die Durchflussachse verhindert. Damit wird das Risiko, dass sich eine Schraubverbindung zwischen dem ersten und dem zweiten Schlauchende löst, effizient reduziert.

Gemäß einer weiteren bevorzugten Ausführungsform weist die Axialsicherung einen mit der Halteeinrichtung einstückig ausgebildeten Axialanschlag auf, an dem die Armatur des ersten Schlauchendes im montierten Zustand in der Armaturaufnahme anliegt und der eine Verschiebung der Armatur des ersten Schlauchendes entlang einer Richtung der Durchflussachse in der Armaturaufnahme verhindert. Somit wird gewährleistet, dass die Schlauchenden sicher, insbesondere formschlüssig, in der Armaturaufnahme gehalten werden und sich nicht lösen kann. Vorzugsweise ist der Axialanschlag als Verengung eines Öffnungsquerschnittes der Armaturaufnahme entlang der Durchflussachse ausgebildet, insbesondere als die Armaturaufnahme innen zumindest teilweise und bevorzugt vollständig umlaufender Vorsprung, insbesondere als ein in Radialrichtung zur Durchflussachse hin vorstehende Vorsprung.

Erfindungsgemäß weist die Axialsicherung einen lösbaren Axialanschlag auf, an dem die Armatur des ersten Schlauchendes in der Armaturaufnahme anliegt und der eine Verschiebung der Armatur des ersten Schlauchendes entlang einer Richtung der Durchflussachse in der Armaturaufnahme verhindert. Grundsätzlich ist es somit möglich, dass der Axialanschlag fix und insbesondere auch einstückig mit der Halteeinrichtung ausgebildet ist. Es gibt allerdings auch Montagesituationen, in denen es bevorzugt, wenn der Axialanschlag als ein an der übrigen Halteeinrichtung lösbar fixierbares Element ausgebildet ist. Auf diese Weise kann die Axialsicherung durch die Montage der Halteeinrichtung sozusagen aktiviert und durch die Demontage deaktiviert werden.

Darüber hinaus ist es in einer erfindungsgemäßen Ausführungsform vorgesehen, dass die Halteeinrichtung eine Axialsicherungsaufnahme aufweist, die von einer Außenseite der Halteeinrichtung bis in die Armaturaufnahme durchgeht, wobei der lösbare Axialanschlag, insbesondere senkrecht zur Durchflussachse, in die Axialsicherungsaufnahme einschiebbar ist, so dass der lösbare Axialanschlag wenigstens teilweise einen Haltekragen der in der Armaturaufnahme befindlichen Armatur des ersten Schlauchendes hintergreift und diese formschlüssig in einer Richtung der Durchflussachse sichert.

Der lösbare Axialanschlag kann einen lösbares Befestigungselement, insbesondere ein Steckelement, ganz besonders einen Bolzen, umfassen, das/der eine Bewegung der Armatur des ersten Schlauchendes formschlüssig in einer Richtung der Durchflussachse verhindert.

Auch ist es vorteilhaft, wenn der lösbare Axialanschlag zwei Vorsprünge umfasst, mit denen der lösbare Axialanschlag die Armatur des ersten Schlauchendes zumindest teilweise, insbesondere wenigstens zur Hälfte des Umfanges der Armatur, umgreift.

Gemäß einer alternativen erfindungsgemäßen Ausführungsform weist die Halteeinrichtung eine Bohrung auf, an der der lösbare Axialanschlag mit einer Befestigungseinrichtung, insbesondere einer Schraube, befestigbar ist. Die Lösbarkeit des Axialanschlags vereinfacht die Montage bzw. das Befestigen der Schlauchenden in der Armaturaufnahme.

Die Axialsicherungsaufnahme kann als eine Vertiefung in Richtung der Durchflussachse in der Halteeinrichtung ausgebildet sein. Auch kann eine Sicherungshalterung vorhanden sein, die an der Halteeinrichtung befestigt ist und die den lösbaren Axialanschlag in Richtung der Durchflussachse formschlüssig in der Axialsicherungsaufnahme hält.

Gemäß einer weiteren bevorzugten Ausführungsform sind zwei lösbare Axialanschläge für die Armatur des ersten Schlauchendes vorgesehen, insbesondere in Axialrichtung der Durchflussachse zueinander beabstandet, um eine Verschiebung in Richtung einer Durchflussrichtung und entgegen der Richtung dieser Durchflussrichtung zu verhindern und/oder um eine in Radialrichtung beidseitige Sicherung zu ermöglichen. Dies können beispielsweise zwei durch Bohrungen geführte Steckbolzen oder ähnliches sein.

Gemäß noch einer weiteren bevorzugten Ausführungsform weist die Axialsicherung sowohl den mit der Halteeinrichtung einstückig ausgebildeten Axialanschlag und den lösbaren Axialanschlag auf, wobei die Axialanschläge eine Verschiebung der Armatur des ersten Schlauchendes entlang jeweils unterschiedlicher Richtungen der Durchflussachse in der Armaturaufnahme verhindern, so dass die Armatur des ersten Schlauchendes in beiden Richtungen entlang der Durchflussachse gegen Verschiebungen gesichert ist.

Vorzugsweise ist die Halteeinrichtung zur Aufnahme und Sicherung von mehreren Hydraulikschlauchkupplungen gleichzeitig ausgebildet, wobei die Durchflussachsen der jeweiligen Hydraulikschlauchkupplungen insbesondere parallel zueinander angeordnet sind. Die vorstehend genannten Merkmale liegen dann vorzugsweise in entsprechender Anzahl vervielfacht an der Halteeinrichtung vor.

Die Armatursicherung kann auch mehrere Halteeinrichtungen umfassen, die formschlüssig komplementär zueinander ausgebildet und aneinander befestigbar sind, insbesondere derart, dass die Durchflussachsen sämtlicher Hydraulikschlauchkupplungen parallel zueinander angeordnet sind. Auf diese Weise können insbesondere im Montageprozess auf leichte Weise Anschlussgruppen an zentraler Stelle zusammengefasst werden.

Ein weiterer Aspekt der Erfindung liegt in einer Armatursicherung umfassend die Haltereinrichtung, wie vorstehend beschrieben, sowie die Armatur des ersten Schlauchendes mit einer Anschlussstelle zur Aufnahme einer Armatur eines zweiten Schlauchendes.

Darüber hinaus wird gemäß der Erfindung eine Baumaschine, insbesondere ein Boden- oder Müllverdichter oder Straßenfertiger, bereitgestellt, welche, insbesondere aufweisend ein Knickgelenk, mit einer Armatursicherung wie vorstehend beschrieben ausgestattet ist.

Vorzugsweise ist die Armatursicherung Teil einer Vormontagebaugruppe, insbesondere einer Antriebsvormontagebaugruppe. Bei einer Vormontagebaugruppe handelt es sich somit um eine Gesamtheit von Elementen, die im Rahmen der Montage eines Baumaschine für sich separat vormontiert wird und anschließend in die übrige Baumaschine als Gesamtheit eingebaut wird. Eine Antriebsvormontagebaugruppe ist eine Vormontagebaugruppe, die den Antriebsmotor, üblicherweise ein Verbrennungsmotor, mit umfasst.

Erfindungsgemäß wird ferner ein Verfahren zur Herstellung einer Hydraulikschlauchkupplung einer Baumaschine, insbesondere einer Baumaschine wie oben beschrieben, bereitgestellt, umfassend die folgenden Schritte: Anbringen einer Armatur an einem ersten Schlauchende eines ersten Hydraulikschlauches, Einlegen der Armatur des ersten Schlauchendes in eine Armaturaufnahme einer Armatursicherung, Sichern der Armatur des ersten Schlauchendes gegen eine Drehung in der Armaturaufnahme der Armatursicherung, Sichern der Armatur des ersten Schlauchendes gegen eine axiale Bewegung in der Armaturaufnahme der Armatursicherung bezogen auf eine Durchflussachse der Hydraulikschlauchkupplung, Anbringen einer zur Armatur des ersten Schlauchendes komplementären Armatur an einem zweiten Schlauchende eines zweiten Hydraulikschlauches, und Verbinden der Armatur des ersten Schlauchendes unmittelbar mit der Armatur des zweiten Schlauchendes.

Vorzugsweise umfasst das Verfahren das Durchführen der Schritte a) bis d) an einer ersten Baugruppe, das Durchführen des Schrittes e) an einer zweiten Baugruppe, und das Verbinden der ersten und der zweiten Baugruppe durch Schritt f).

Eine Weiterbildung des erfindungsgemäßen Verfahrens besteht schließlich darin, dass zunächst eine Vormontagebaugruppe hergestellt wird, diese umfassend die erfindungsgemäße Armatursicherung, dass anschließend die Vormontagebaugruppe in die übrige Baumaschine verbaut wird, und dass anschließend die Herstellung wenigstens einer Schlauchverbindung durch Anschließend eines zweiten Schlauchendes, idealerweise mit entsprechender Anschlussarmatur, an die bereits in der Halteeinrichtung fixierte Armatur des ersten Schlauchendes erfolgt.

Nachfolgend wird die Erfindung anhand der in den Figuren angegebenen Ausführungsbeispiele näher beschrieben. Es zeigen schematisch:
Fig. 1 eine Seitenansicht einer ersten Baumaschine, konkret vom Typ Walzenzug;
Fig. 2 eine Seitenansicht einer zweiten Baumaschine, konkret vom Typ Müllverdichter;
Fig. 3 eine Seitenansicht einer dritten Baumaschine, konkret vom Typ Straßenfertiger;
Fig. 4 eine erste Baugruppe und eine zweite Baugruppe zum Ausführen des Verfahrens zur Herstellung einer Hydraulikschlauchkupplung einer Baumaschine;
Fig. 5 eine Seitenansicht (oben) und eine Schnittansicht (unten) einer Armatursicherung gemäß einer Ausführungsform der Erfindung;
Fig. 6 eine perspektivische Ansicht der Halteeinrichtung aus Fig. 5;
Fig. 7 eine weitere perspektivische Ansicht der in Fig. 5 dargestellten Halteeinrichtung;
Fig. 8 noch eine weitere perspektivische Ansicht der in Fig. 5 dargestellten Halteeinrichtung;
Fig. 9 eine Explosionsansicht der Armatursicherung gemäß Fig. 5;
Fig. 10 eine perspektivische Ansicht einer Armatursicherung gemäß einer weiteren Ausführungsform;
Fig. 11 zeigt eine Schnittansicht einer Armatursicherung gemäß einer weiteren Ausführungsform;
Fig. 12 eine perspektivische Ansicht einer Halteeinrichtung gemäß der in Fig. 11 dargestellten Ausführungsform;
Fig. 13 eine weitere perspektivische Ansicht der in Fig. 11 dargestellten Halteeinrichtung;
Fig. 14 noch eine weitere perspektivische Ansicht der in Fig. 11 dargestellten Halteeinrichtung;
Fig. 15 eine Explosionsansicht der Armatursicherung gemäß der in Fig. 11 dargestellten Ausführungsform;
Fig. 16 eine perspektivische Ansicht einer Armatursicherung gemäß einer weiteren Ausführungsform;
Fig. 17 eine Armatursicherung gemäß einer weiteren Ausführungsform der Erfindung;
Fig. 18 eine perspektivische Ansicht einer Halteeinrichtung gemäß der in Fig. 17 dargestellten Ausführungsform;
Fig. 19 eine weitere perspektivische Ansicht der in Fig. 17 dargestellten Halteeinrichtung;
Fig. 20 noch eine weitere perspektivische Ansicht der in Fig. 17 dargestellten Halteeinrichtung;
Fig. 21 eine Explosionsansicht der Armatursicherung gemäß der in Fig. 17 dargestellten Ausführungsform;
Fig. 22 eine perspektivische Ansicht einer Armatursicherung gemäß einer weiteren Ausführungsform;
Fig. 23 eine Armatursicherung gemäß einer weiteren Ausführungsform der Erfindung;
Fig. 24 eine perspektivische Ansicht einer Halteeinrichtung gemäß der in Fig. 23 dargestellten Ausführungsform;
Fig. 25 eine weitere perspektivische Ansicht der in Fig. 23 dargestellten;
Fig. 26 noch eine weitere perspektivische Ansicht der in Fig. 23 dargestellten Halteeinrichtung;
Fig. 27 eine Explosionsansicht der Armatursicherung gemäß der in Fig. 23 dargestellten Ausführungsform; und
Fig. 28 eine perspektivische Ansicht einer Armatursicherung gemäß einer weiteren Ausführungsform.

Gleiche oder funktionsgleiche Bauteile sind in den Figuren mit gleichen Bezugszeichen bezeichnet. Nicht jedes sich in den Figuren wiederholende Bauteil ist dabei in jeder der Figuren mit einem separaten Bezugszeichen gekennzeichnet.

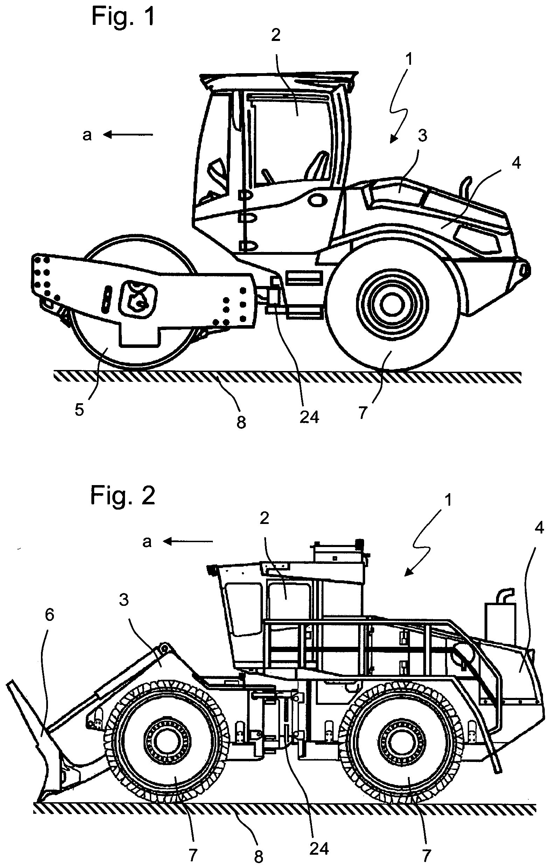

Fig. 1 zeigt eine erste Baumaschine 1 zur Bodenverdichtung, welche hier als Walzenzug ausgebildet ist. Die Baumaschine 1 umfasst einen zweiteiligen Maschinenrahmen 3, wobei das in Bezug auf die Arbeitsrichtung a vordere bzw. vorne angeordnete und das in Bezug auf die Arbeitsrichtung a hintere bzw. hinten angeordnete Teil des Maschinenrahmens 3 über ein Knickgelenk 24 miteinander verbunden sind. Ferner ist an dem vorderen Teil des Maschinenrahmens 3 eine Verdichtungs- bzw. Walzbandage 5 und an dem hinteren Teil des Maschinenrahmens 3 ein Fahrstand 2 und ein Antriebsmotor 4 vorgesehen, über den die für den Arbeits- und Fahrbetrieb erforderliche Antriebsenergie zur Verfügung gestellt wird, insbesondere zum Antrieb der Räder 7.

Fig. 2 zeigt eine zweite Baumaschine 1 in Form eines Müllverdichters. Hier umfasst die Baumaschine 1 ebenfalls einen zweiteiligen, knickgelenkten Maschinenrahmen 3, wobei das in Bezug auf die Arbeitsrichtung a vordere bzw. vorne angeordnete und das in Bezug auf die Arbeitsrichtung a hintere bzw. hinten angeordnete Teil des Maschinenrahmens 3 über ein Knickgelenk 24 miteinander verbunden sind. Am Maschinenrahmen 3 sind Fahreinrichtungen des Fahrwerks 7 gelagert, die vorliegend als Schaffußbandagen ausgebildet sind. An dem vorderen Teil des Maschinenrahmens 3 ist darüber hinaus ein heb- und senkbarer Räumschild 6 vorgesehen. An dem hinteren Teil des Maschinenrahmens 3 sind ein Fahrstand 2 und ein Antriebsmotor 4 angeordnet, um die Baumaschine 1 auf dem Boden 8 fortzubewegen, so dass im Arbeitsbetrieb der Müllverdichter 1 in und entgegen der Vorwärtsrichtung a über den zu verdichtenden, zu zerkleinernden und/oder zu verschiebenden Müll rangieren kann.

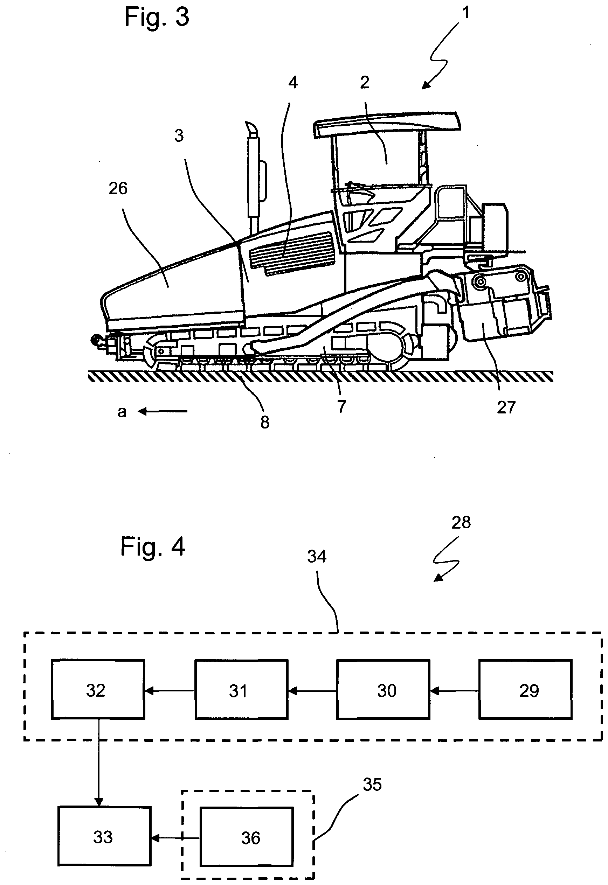

Fig. 3 zeigt eine dritte Baumaschine 1, welche als Straßenfertiger ausgebildet ist. Die Baumaschine 1 umfasst einen an dem Maschinenrahmen 3 angeordneten Fahrerstand 2, eienn Antriebsmotor 4, Fahreinrichtungen bzw. das Fahrwerk 7, hier im Ausführungsbeispiel als Kettenlaufwerk ausgebildet, und einen Aufnahmebunker bzw. Bunker 26. Ferner ist an dem hinteren Ende der Baumaschine 1 eine heb- und senkbare Einbaubohle 27 zum Verdichten und Glätten von Einbaugut vorgesehen.

Die Auflistung der in den Figuren 1 bis 3 angeführten konkreten Baumaschinentypen ist nur beispielhaft für die hier in Frage kommenden Baumaschinen zu verstehen. Von der Erfindung umfasst sind auch andere Baumaschinen, insbesondere Kipper, speziell knickgelenkte Muldenkipper, Raupen, Grader, Straßenfräsen, Recycler, Stabilisierer, Bagger, Radlader etc.

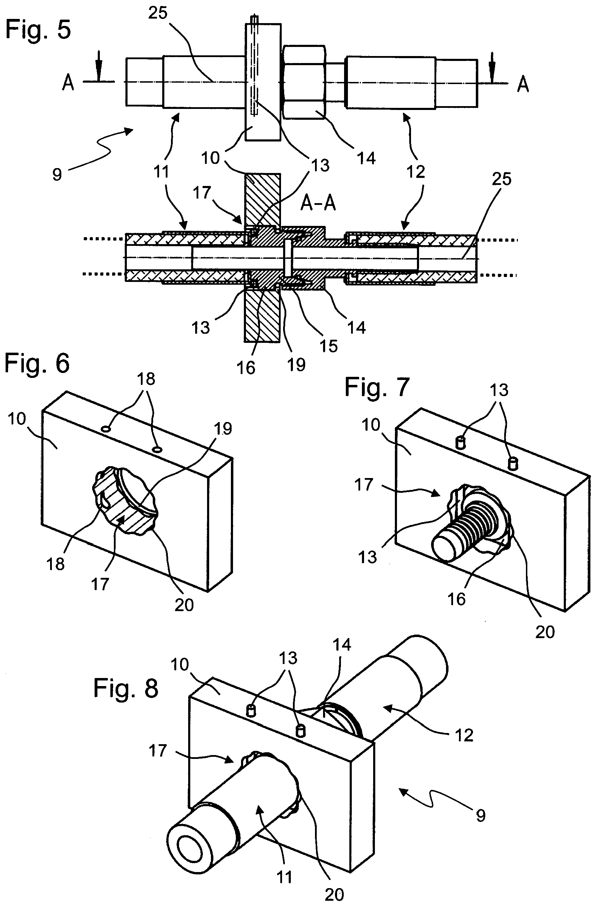

Fig. 4 stellt schematisch eine erste Baugruppe 34 und eine zweite Baugruppe 35 zum Ausführen des Verfahrens 28 zur Herstellung einer Hydraulikschlauchkupplung einer Baumaschine (siehe Fig. 1 bis Fig. 3) dar. Insbesondere werden in der ersten Baugruppe 34 die folgenden Schritte:
a) Anbringen 29 einer Armatur an einem ersten Schlauchende 11 (siehe Fig. 5) eines ersten Hydraulikschlauches,
b) Einlegen 30 der Armatur des ersten Schlauchendes 11 in eine Armaturaufnahme 17 einer Armatursicherung 9 (siehe Fig. 5),
c) Sichern 31 der Armatur des ersten Schlauchendes 11 gegen eine Drehung in der Armaturaufnahme 17 der Armatursicherung 9 (siehe Fig. 5), nund
d) Sichern 32 der Armatur des ersten Schlauchendes 11 gegen eine axiale Bewegung in der Armaturaufnahme 17 der Armatursicherung 9 bezogen auf eine Durchflussachse 25 der Hydraulikschlauchkupplung (siehe Fig. 5).

In der zweiten Baugruppe 35 erfolgt der Schritt des Anbringens 36 einer zur Armatur des ersten Schlauchendes 11 komplementären Armatur an einem zweiten Schlauchende 12 eines zweiten Hydraulikschlauches (siehe Fig. 5) zeitlich und örtlich völlig separat zu den Schritten 29 bis 32. Nachdem die obigen Schritte ausgeführt sind, erfolgt ein weiterer Schritt des Verbindens 33 der Armatur des ersten Schlauchendes 11 unmittelbar mit der Armatur des zweiten Schlauchendes 12 (siehe Fig. 5), beispielsweise dann, wenn die in den Schritten 29 bis 32 erhaltene Vormontagebaugruppe im Schritt 33 an die übrige Baumaschine angeschlossen wird. Der in Fig. 4 verdeutlichte Vorteil besteht darin, dass lediglich eine einzige Schlauchverbindung zur Herstellung einer fluidleitenden Verbindung zwischen den beiden Schläuchen notwendig ist und damit auch nur eine abzudichtende Verbindungsstelle besteht.

Fig. 5 zeigt eine Seitenansicht (oberer Teil) sowie eine Schnittansicht (unterer Teil) entlang der Linie A-A in Draufsicht (Pfeile) einer Armatursicherung 9 gemäß einer Ausführungsform der Erfindung, welche zum Verbinden von in Baumaschinen, wie sie beispielhaft mit Bezug auf die Fig. 1 bis Fig. 3 beschrieben wurden, verwendeten Hydraulikschläuchen eingesetzt wird, wobei die Armatursicherung 9 dazu dient, die Montage und Sicherung der Hydraulikschlauchkupplung zu erleichtern. Hierzu weist die Armatursicherung 9 eine Halteeinrichtung 10 auf, die eine Armaturaufnahme 17 zur Aufnahme einer Armatur eines ersten Schlauchendes 11 eines ersten Hydraulikschlauchs dient. Die Armaturaufnahme 17 durchdringt die Halteeinrichtung 10 dabei derart, dass eine Armatur eines zweiten Schlauchendes 12 eines zweiten Hydraulikschlauchs unmittelbar mit der Armatur des in der Armaturaufnahme 17 gesicherten ersten Schlauchendes 11 kuppelbar - beispielsweise verschraubbar - ist. Dazu kann eine geeignete Durchgangsöffnung in der Halteeinrichtung 10 vorgesehen sein, wie beispielsweise in den Figuren 6 bis 8 weiter gezeigt.

Es kann vorgesehen sein, dass die Halteeinrichtung 10 beispielsweise ortsfest in der jeweiligen Baumaschine, beispielsweise durch eine direkte oder indirekte Anbindung an den Maschinenrahmen, fixiert ist, um auf diese Weise eine gute Montierbarkeit einerseits des ersten Schlauchendes bzw. der entsprechenden Armatur an/in der Halteeinrichtung 10 zu ermöglichen und andererseits die Anbindung des zweiten Schlauchendes bzw. der entsprechenden Armatur an die erste Armatur zu ermöglichen.

Ferner weist die Armatursicherung 9 eine Axialsicherung auf, die eine Verschiebung der Armatur des ersten Schlauchendes 11 entlang wenigstens einer Richtung der Durchflussachse 25 in der Armaturaufnahme 17 verhindert. Die Axialsicherung kann einen lösbaren Axialanschlag 13 aufweisen, an dem die Armatur des ersten Schlauchendes 11 in der Armaturaufnahme 17 anliegt und der eine Verschiebung der Armatur des ersten Schlauchendes 11 entlang einer Richtung der Durchflussachse 25 in der Armaturaufnahme 17 verhindert.

Der lösbare Axialanschlag 13, welcher noch detaillierter in Zusammenhang mit den Figuren 6 bis 8 beschrieben wird, kann einen Bolzen umfassen, der eine Bewegung der Armatur des ersten Schlauchendes 11 formschlüssig in einer Richtung der Durchflussachse 25 verhindert. Auch kann der lösbare Axialanschlag 13 zwei Vorsprünge umfassen, mit denen der lösbare Axialanschlag 13 die Armatur des ersten Schlauchendes 11 zumindest teilweise, insbesondere wenigstens zur Hälfte des Umfanges der Armatur, umgreift.

In der hier dargestellten Ausführungsform ist die Axialsicherung sowohl durch den mit der Halteeinrichtung 10 als auch mit einem einstückig mit einem Basisblock der Halteeinrichtung 10 ausgebildeten Axialanschlag 19 ausgebildet, welcher ebenfalls eine Verschiebung der Armatur des ersten Schlauchendes 11 entlang einer Richtung der Durchflussachse 25 in der Armaturaufnahme 17 verhindert, welche unterschiedlich ist zu der Richtung, in welcher der lösbare Axialanschlag 13 einer Verschiebung entgegenwirkt.

Ein an der Armatur des ersten Schlauchendes 11 vorgesehener Haltekragen 16 und ein von dem Haltekragen 16 abragender Nippel 15 bzw. Vorsprung sind in der Halteeinrichtung 10 aufgenommen. Auf dem Nippel bzw. Vorsprung 15 ist ein Außengewinde vorgesehen, auf welches die Schraubsicherung 14, welche an dem zweiten Schlauchende 12 vorgesehen ist, aufschraubbar ist. Der Nippel bzw. Vorsprung 15 steht dazu in Durchflussrichtung über den Basisblock der Halteeinrichtung 10 vor.

Fig. 6 zeigt eine perspektivische Ansicht der Halteeinrichtung 10 gemäß den Ausführungen der Erfindung in Fig. 5. Diese verdeutlichen, dass der Halteblock der Halteeinrichtung 10 mit einer Verdrehsicherung 20 versehen ist, die eine Verdrehung der Armatur des ersten Schlauchendes 11 um die Durchflussachse 25 in der Armaturaufnahme 17 verhindert. Die Verdrehsicherung 20 wird dadurch erzielt, dass die Axialsicherungsaufnahme 18 der Armaturaufnahme 17 an der Innenwandung nicht glatt bzw. kreisförmig ausgebildet ist, sondern sich entlang der Durchflussachse 25 erstreckenden Vertiefungen aufweist, in die die Armatur des ersten Schlauchendes in Radialrichtung eingreift. Dadurch wird eine Formschlusssicherung in Umdrehungsrichtung zur Durchflussachse 25 erhalten, so dass sich die Armatur des ersten Schlauchendes in der Haltereinrichtung nicht um die Durchflussachse 25 drehen kann.

Weiterhin ist hier erkennbar, dass die Axialsicherungsaufnahme 18 zwei Durchgangs- bzw. Fixierbohrungen umfasst, in welche der lösbare Axialanschlag 13 (siehe Fig. 7 und Fig. 8) in Form von zwei Stiften bzw. Bolzen senkrecht zur Durchflussachse 25 einführbar ist, um eine axiale Sicherung, die lösbar ist, zu realisieren.

Fig. 7 zeigt eine perspektivische Ansicht der in Fig. 6 dargestellten Halteeinrichtung 10 mit eingesteckter Armatur des ersten Schlauchendes. Weiterhin ist erkennbar, dass die zwei Stifte in die Durchgangsbohrungen eingeführt sind, so dass der lösbare Axialanschlag 13 gebildet wird, welcher den Haltekragen 16 der in der Armaturaufnahme 17 befindlichen Armatur des ersten Schlauchendes 11 (siehe Fig. 8) hintergreift und formschlüssig in einer Richtung der Durchflussachse 25 sichert (siehe Fig. 8).

Fig. 8 zeigt eine weitere perspektivische Ansicht der in Fig. 6 dargestellten Halteeinrichtung 10, wobei hier das erste Schlauchende 11 und das zweite Schlauchende 12 darin aufgenommen und axial und radial unverschiebbar gesichert sind.

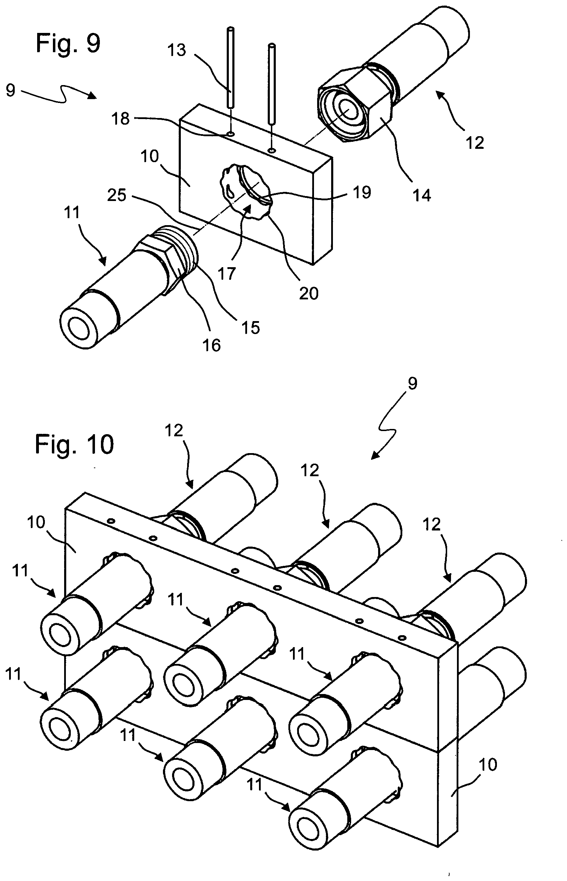

Fig. 9 betrifft nun eine Explosionsansicht der Armatursicherung 9, wie zu den Figuren 5 bis 8 bereits diskutiert. Wie hier erkennbar ist, umfasst die Armatursicherung die Halteeinrichtung 10 mit der oben beschriebenen Verdrehsicherung 20 in der Armaturaufnahme 17, welche, wie ebenfalls hierzu vorstehend beschrieben, durch zumindest eine Vertiefung in Richtung der Durchflussachse 25 in der Halteeinrichtung 10 ausgebildet ist, und die Axialsicherung mit der Axialsicherungsaufnahme 18, in die der lösbare Axialanschlag in Form von zwei durch die in der Halteeinrichtung 10 ausgebildeten Durchgangsbohrungen senkrecht zur Durchflussachse 25, einführbar ist. So kann das mit der Schraubsicherung 14 versehene zweite Schlauchende 12 von einer Seite in die Halteeinrichtung 10 eingeführt bzw. an die Haltereinrichtung 10 herangeführt werden und das erste Schlauchende 11, an welchem der Haltekragen 16, hier mit sechseckigem Umfang ausgebildet, und dem mit einem Au-ßengewinde versehenen Vorsprung bzw. Nippel 15 vorgesehen sind, von der gegenüberliegenden Seite in die Halteeinrichtung 10 eingeführt werden. Bei dieser Ausführungsform wird somit nur eine der beiden Armaturen, nämlich die des ersten Schlauchendes, in der Halteeinrichtung 10 fixiert. Die erste und die zweite Armatur können separat zueinander an die Schlauchenden montiert werden und werden dann direkt miteinander verbunden. Weiterhin erkennbar ist hier auch der in der Armaturaufnahme 17 ausgebildete einstückige Axialanschlag 19, welcher ringförmig an der Eintrittsöffnung, in welche das zweite Schlauchende 12 eingeführt wird, ausgebildet ist, wodurch der Durchmesser der Armaturaufnahme 17 an der Eintrittsöffnung verkleinert wird.

Fig. 10 zeigt eine perspektivische Ansicht einer Armatursicherung 9 gemäß einer weiteren Ausführungsform, aufbauend auf dem in den Figuren 5 bis 9 gezeigten Grundaufbau der Halteeinrichtung 10. Hier ist die Halteeinrichtung 10 nun allerdings zur Aufnahme und Sicherung von mehreren Hydraulikschlauchkupplungen gleichzeitig ausgebildet, wobei die Durchflussachsen 25 der jeweiligen Hydraulikschlauchkupplungen parallel zueinander angeordnet sind. In der hier dargestellten Ausführungsform sind jeweils drei erste Schlauchenden 11 und drei zweite Schlauchenden 12 in der Halteeinrichtung 10 miteinander koppelbar. Ferner sind hier zwei Halteeinrichtungen 10, die formschlüssig komplementär zueinander ausgebildet sind, vorgesehen, wobei die Halteeinrichtungen 10 aneinander befestigt sind, derart, dass die Durchflussachsen 25 sämtlicher Hydraulikschlauchkupplungen parallel zueinander angeordnet sind. Im Vergleich zu dem Ausführungsbeispiel in den Figuren 5 bis 9 wurde hier somit die beschriebene Halteeinrichtung 10 in einem Halteblock vervielfacht.

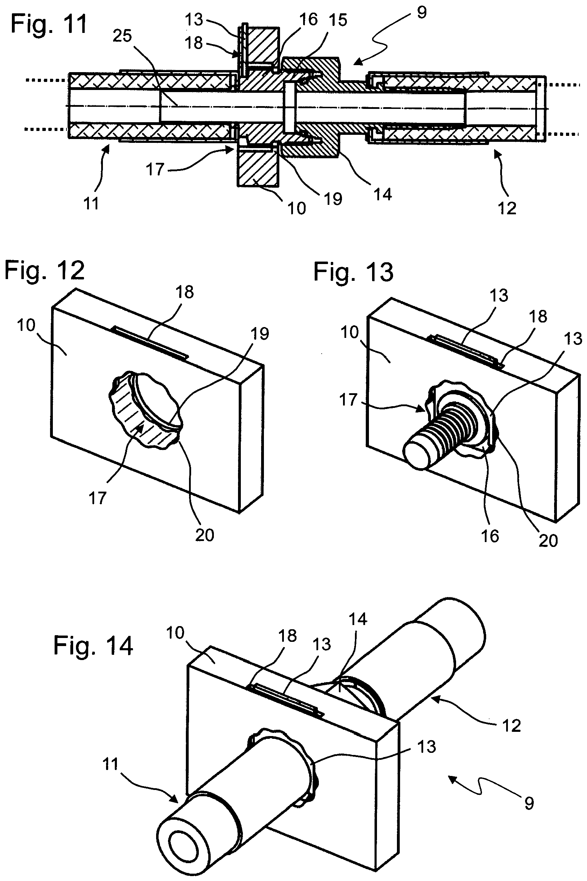

Fig. 11 zeigt eine Schnittansicht einer Armatursicherung 9 gemäß einer weiteren Ausführungsform, welche der zu den Figuren 5 bis 8 beschriebenen Variante ähnlich ist, so dass nachstehend im Wesentlichen die bestehenden Unterschiede diskutiert werden und im Übrigen auf die vorhergehenden Ausführungen Bezug genommen wird. Der Unterschied liegt hier insbesondere in der Ausbildung des lösbaren Axialanschlags 13, welcher in Zusammenhang mit den Figuren 12 bis 15 noch genauer beschrieben wird.

Fig. 12 ist eine perspektivische Ansicht einer Halteeinrichtung 10 gemäß der in Fig. 11 dargestellten Ausführungsform. Wie bereits erwähnt, unterscheidet sich hier der lösbare Axialanschlag 13 von den zuvor beschriebenen Ausführungsformen und zwar insbesondere dadurch, dass zur lösbaren axialen Sicherung der in die Halteeinrichtung 10 einführbaren Armatur des ersten Schlauchendes 11 nicht zwei senkrecht zu der Durchflussachse verlaufende Durchgangsbohrungen in der Halteeinrichtung 10 vorgesehen sind, sondern hier ein länglicher Schlitz als Axialsicherungsaufnahme 18 vorgesehen ist. Fig. 13 zeigt eine weitere perspektivische Ansicht der in Fig. 12 dargestellten Halteeinrichtung 10. Hier ist der lösbare Axialanschlag 13 in die als Schlitz ausgebildete Axialsicherungsaufnahme 18 eingeführt. Der lösbare Axialanschlag ist dabei ein in diesen Schlitz senkrecht zur Durchflussachse 25 eingeschobenes planes Sicherungselement, welches die Armatur des in die Halteeinrichtung 10 eingeschobenen ersten Schlauchendes 10 teilweise umgreift.

Fig. 14 ist noch eine weitere perspektivische Ansicht der in Fig. 12 dargestellten Halteeinrichtung 10. Wie hier erkennbar ist, ist die Armatursicherung 9 zusammengebaut, indem die Armatur des ersten Schlauchendes 11 in die Halteeinrichtung 10 von einer Seite kommend in die Armaturaufnahme 17 eingeführt und gesichert ist und die Armatur des zweiten Schlauchendes 12 von der gegenüberliegenden Seite kommend auf den Vorsprung 15 der Armatur des ersten Schlauchendes 11 aufgesetzt ist.

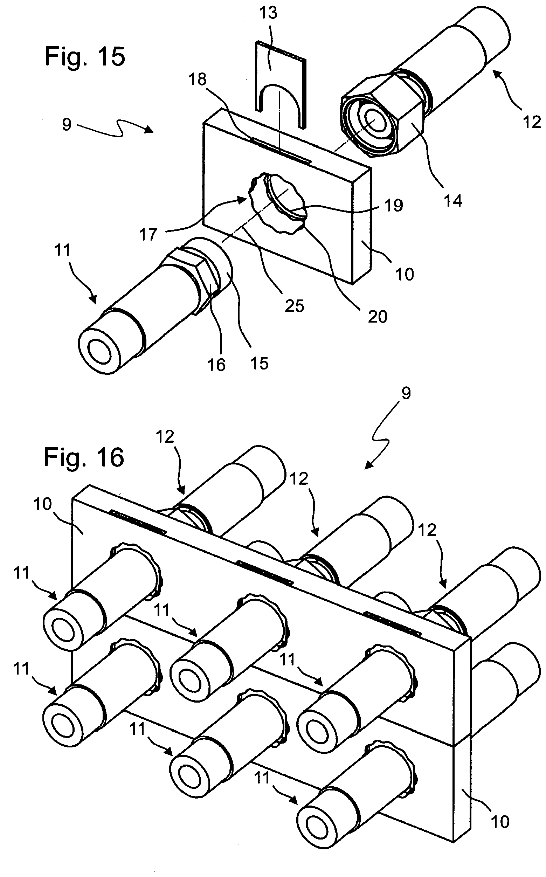

Fig. 15 zeigt eine Explosionsansicht der Armatursicherung gemäß der in Fig. 11 dargestellten Ausführungsform, welche im Wesentlichen wie die in Zusammenhang mit Fig. 9 beschriebene Ausführungsform ausgebildet ist. Wie hier erkennbar ist, unterscheidet sich der lösbare Axialanschlag, welcher hier nicht in Form von Stiften ausgebildet ist, sondern in Form des plättchenförmigen Axialanschlages 13, welcher an einem unteren Ende mit der halbkreisförmigen Ausnehmung versehen ist, und welches durch den Schlitz der Axialsicherungsaufnahme 18 hindurch führbar ist, so dass die Armatur des ersten Schlauchendes 11 im Bereich des Vorsprungs 16 in Eingriff in Richtung der Durchflussachse 25 gelangt.

Fig. 16 ist eine perspektivische Ansicht einer Armatursicherung 9 gemäß einer weiteren Ausführungsform. Wie hier erkennbar ist, entspricht der Aufbau und die Anordnung der hier zwei aneinander befestigten Armatursicherungen 9 im Wesentlichen der in Zusammenhang mit den Figuren 11 bis 15 beschriebenen Ausführungsform. Im Unterschied hierzu weisen sind gleichzeitig Aufnahmen für mehrere erste Schlauchenden 11 in der Halteeinrichtung 10 vorhanden.

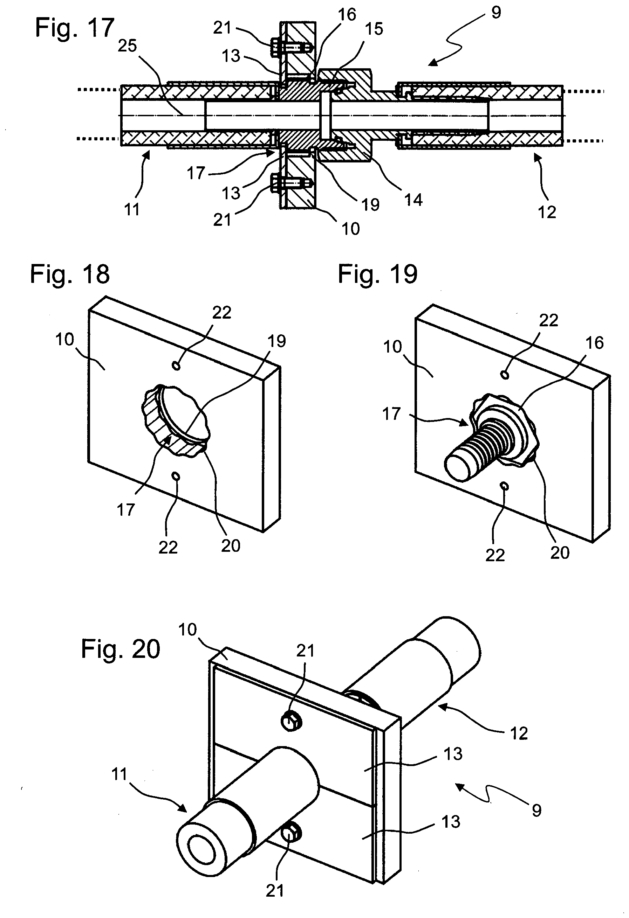

Fig. 17 zeigt eine Armatursicherung 9 gemäß einer weiteren Ausführungsform der Erfindung, welche sich wiederum von den zuvor beschriebenen Ausführungsform in der Ausgestaltung des lösbaren Axialanschlags 13 unterscheidet. Die restlichen Komponenten der Armatursicherung 9 sind wie in den zuvor beschriebenen Ausführungsformen ausgebildet und werden daher nicht nochmal beschrieben. Wie hier erkennbar ist, ist der lösbare Axialanschlag 13 als plattenartiges Element ausgebildet, welches mittels Befestigungseinrichtungen 21, hier mittels Schrauben, an der Halteeinrichtung 10 befestigt ist. Die Schrauben greifen in entsprechend in der Halteeinrichtung 10 vorgesehene Bohrungen ein, welche in Zusammenhang mit Fig. 18 weiter beschrieben werden.

Fig. 18 ist eine perspektivische Ansicht einer Halteeinrichtung 10 gemäß der in Fig. 17 dargestellten Ausführungsform. Wie hier erkennbar ist, sind in der Halteeinrichtung 10 die Bohrungen 22 vorgesehen, welche sich im Wesentlichen parallel zur Durchflussachse 25 erstrecken, wobei eine erste Bohrung 22 oberhalb der Armaturaufnahme 17 und eine zweite Bohrung 22 unterhalb der Armaturaufnahme 17 vorgesehen ist.

Fig. 19 ist eine weitere perspektivische Ansicht der in Fig. 18 dargestellten Halteeinrichtung 10, wobei hier bereits der Haltekragen 16 in der Armaturaufnahme 17 verdrehsicher angeordnet ist.

Fig. 20 noch eine weitere perspektivische Ansicht der in Fig. 18 dargestellten Halteeinrichtung 10, wobei hier das erste Schlauchende 11 darin durch den aufgeschraubten, plattenförmigen Axialanschlag 13 gesichert sind, wozu als Schrauben ausgebildete Befestigungseinrichtungen 21 lösbar mit dem Halteblock der Halteeinrichtung 10 verbunden sind. Der Axialanschlag 13 ist dabei, als zweigeteiltes plattenartiges Element ausgebildet. Eine obere Hälfte des plattenartigen Elements mit einer halbrunden Ausnehmung umgreift von oben das erste Schlauchende 11 und eine untere Hälfte des plattenartigen Elements, welches ebenfalls mit einer halbrunden Ausnehmung ausgebildet ist, umgreift das erste Schlauchende 11 von unten in Eingriff. Beide Hälften des plattenartigen Elements des lösbaren Axialanschlags 13 sind jeweils mittels einer Befestigungseinrichtung 21 an der Halteeinrichtung 10 lösbar durch Schrauben gesichert.

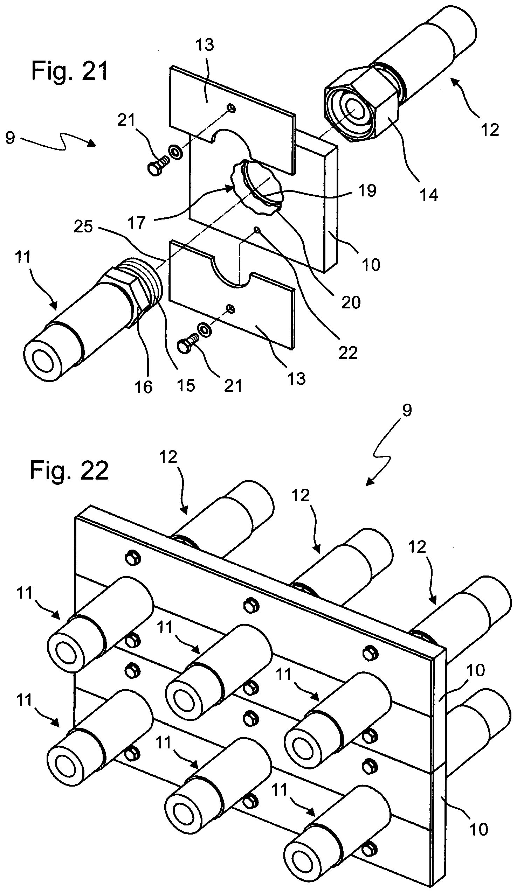

Fig. 21 eine Explosionsansicht der Armatursicherung 9 gemäß der in den Fig. 17 bis 20 dargestellten Ausführungsform, welche als lösbaren Axialanschlag 13 das in Zusammenhang mit Fig. 20 beschriebene geteilte plattenartige Element aufweist.

Fig. 22 ist eine perspektivische Ansicht einer Armatursicherung 9 gemäß einer weiteren Ausführungsform, wobei hier wiederum zwei aneinander befestigte Halteeinrichtungen 10 mit jeweils mehreren (drei) Armaturaufnahmen 17 vorgesehen sind.

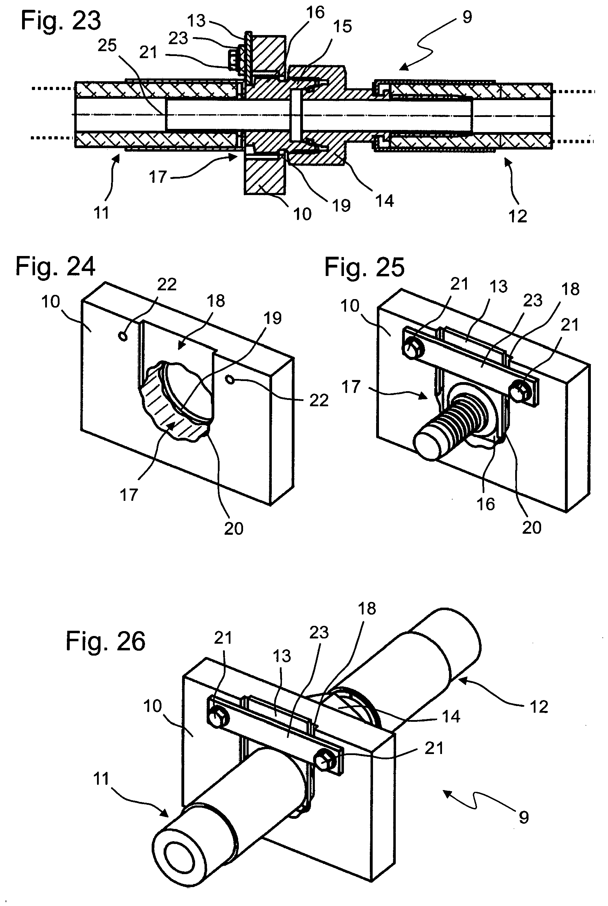

Fig. 23 zeigt eine Armatursicherung 9 gemäß einer weiteren Ausführungsform der Erfindung, welche sich wiederum von den zuvor beschriebenen Ausführungsform in der Ausgestaltung des lösbaren Axialanschlags 13 unterscheidet. Die restlichen Komponenten der Armatursicherung 9 sind wie in den zuvor beschriebenen Ausführungsformen ausgebildet und werden daher nicht nochmal beschrieben. Wie hier erkennbar ist, ist der lösbare Axialanschlag 13 wie auch in den in Fig. 17 bis Fig. 22 beschriebenen Ausführungsformen als plattenartiges Element ausgebildet, welches mittels Befestigungseinrichtungen 21, hier mittels Schrauben, an der Halteeinrichtung 10 befestigt ist. Die Schrauben greifen in entsprechend in der Halteeinrichtung 10 vorgesehene Bohrungen 22 ein, welche in Zusammenhang mit Fig. 24 weiter beschrieben werden.

Fig. 24 ist eine perspektivische Ansicht einer Halteeinrichtung 10 gemäß der in Fig. 23 dargestellten Ausführungsform. Wie hier erkennbar ist, sind in der Halteeinrichtung 10 die Bohrungen 22 vorgesehen, deren jeweilige Längsachsen sich im Wesentlichen parallel zur Durchflussachse 25 erstrecken. Im Gegensatz zu den Ausführungsformen, welche in den Fig. 17 bis Fig. 22 dargestellt sind, ist hier jedoch die erste Bohrung 22 oberhalb der Armaturaufnahme 17, jedoch nach links versetzt dazu und eine zweite Bohrung 22 auf gleicher Höhe wie die erste Bohrung 22, jedoch nach rechts versetzt dazu vorgesehen. Der plattenartig ausgebildete lösbare Axialanschlag 13 ist hier einteilig gebildet und weist eine im Wesentlichen U-förmige Ausnehmung von der oberen Kante des Axialanschlags 13 sich nach unten erstreckend auf.

Fig. 25 ist eine weitere perspektivische Ansicht der in Fig. 24 dargestellten Halteeinrichtung 10, wobei hier bereits der Haltekragen 16 in der Armaturaufnahme 17 verdrehsicher angeordnet ist. Die lösbare axiale Sicherung durch den lösbaren Axialanschlag 13 besteht darin, dass hier eine als bügelartiges Element ausgebildete Sicherungshalterung 23 vorgesehen ist, die an der Halteeinrichtung 10 mittels der Befestigungseinrichtungen 21, insbesondere mittels in die Bohrungen 22 eingeführter Schrauben, befestigt ist und die den lösbaren Axialanschlag 13 in Richtung der Durchflussachse 25 formschlüssig in der Axialsicherungsaufnahme 18 hält.

Fig. 26 ist noch eine weitere perspektivische Ansicht der in Fig. 24 dargestellten Halteeinrichtung 10, wobei hier die Armatur des ersten Schlauchendes 11 darin gesichert ist. Zur axialen Sicherung, die auch mittels der als Schrauben ausgebildeten Befestigungseinrichtung 21 lösbar ist, dient das oben in Zusammenhang mit Fig. 23 bis Fig. 25 beschriebene plattenartige Element mit der Sicherungshalterung 23 als lösbarer Axialanschlag 13.

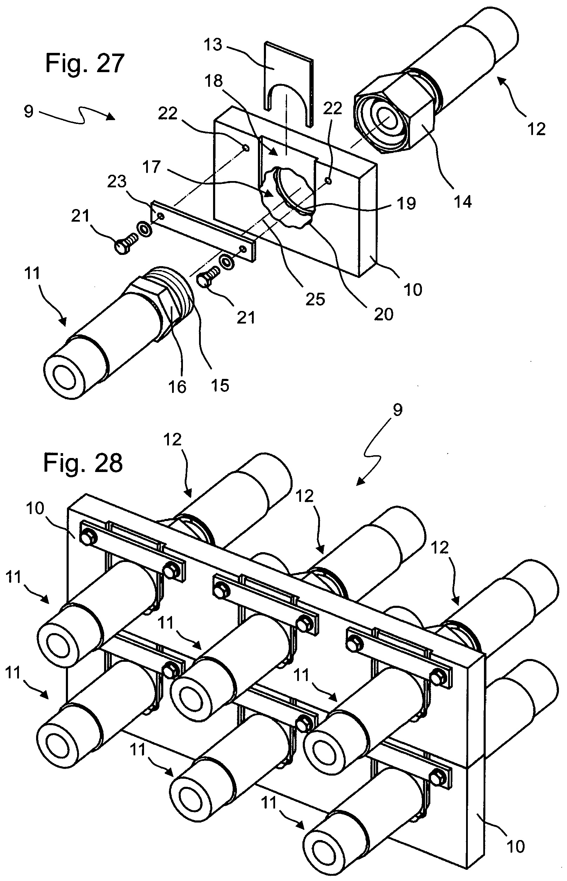

Fig. 27 ist eine Explosionsansicht der Armatursicherung 9 gemäß der in Fig. 24 dargestellten Ausführungsform, welche als lösbaren Axialanschlag 13 das in Zusammenhang mit den Fig. 23 bis Fig. 26 beschriebene plattenartige Element mit der Sicherungshalterung 23 aufweist, welches mittels der als Schrauben ausgebildeten Befestigungseinrichtungen 21 an der Halteeinrichtung 10 befestigbar ist, um das erste Schlauchende 11 in Eingriff zu nehmen und axial zu sichern.

Fig. 28 ist eine perspektivische Ansicht einer Armatursicherung 9 gemäß einer weiteren Ausführungsform, wobei hier wiederum zwei aneinander befestigte Halteeinrichtungen 10 mit jeweils drei Armaturaufnahmen 17 vorgesehen sind. Die ersten Schauchenden 11 sind in den jeweiligen Armaturaufnahmen verdrehsicher und axial nicht verschiebbar gesichert, wobei der lösbare Axialanschlag 13 entsprechend dem in den Fig. 23 bis Fig. 27 dargestellten plattenartigen Element mit der Sicherungshalterung 23 ausgebildet ist, jedoch sind hier jeweils drei U-förmige Ausnehmungen zum in Eingriff nehmen der ersten Schlauchenden 11 vorgesehen.

## Patentansprüche

1. Armatursicherung (9) zur erleichterten Montage und Sicherung von Hydraulikschlauchkupplungen, insbesondere für Baumaschinen (1), mit einer Halteeinrichtung (10), die eine Armaturaufnahme (17) zur Aufnahme einer Armatur eines ersten Schlauchendes (11) umfasst, wobei die Halteeinrichtung (10) eine Verdrehsicherung (20) aufweist, die ausgelegt ist, eine Verdrehung der Armatur des ersten Schlauchendes (11) um eine Durchflussachse (25) in der Armaturaufnahme (17) zu verhindern, wobei
die Armatursicherung (9) eine Axialsicherung aufweist, die ausgelegt ist, eine Verschiebung der Armatur des ersten Schlauchendes (11) entlang wenigstens einer Richtung der Durchflussachse (25) in der Armaturaufnahme (17) zu verhindern,
wobei die Armaturaufnahme (17) die Halteeinrichtung (10) derart durchdringt, dass eine Armatur eines zweiten Schlauchendes (12) unmittelbar mit der Armatur des in der Armaturaufnahme (17) gesicherten ersten Schlauchendes (11) kuppelbar ist, und
wobei die Axialsicherung einen lösbaren Axialanschlag (13) aufweist, an dem die Armatur des ersten Schlauchendes (11) in der Armaturaufnahme (17) anliegen kann und der ausgelegt ist, eine Verschiebung der Armatur des ersten Schlauchendes (11) entlang einer Richtung der Durchflussachse (25) in der Armaturaufnahme (17) zu verhindern
dadurch ge ke n nzeich net,
dass die Halteeinrichtung (10) weiter eine Axialsicherungsaufnahme (18) aufweist, die von einer Au-ßenseite der Halteeinrichtung (10) bis in die Armaturaufnahme (17) durchgeht, wobei der lösbare Axialanschlag (13) in die Axialsicherungsaufnahme (18) einschiebbar ist, so dass der lösbare Axialanschlag (13) wenigstens teilweise einen Haltekragen (16) der in der Armaturaufnahme (17) befindlichen Armatur des ersten Schlauchendes (11) hintergreifen kann und diese formschlüssig in einer Richtung der Durchflussachse (25) sichern kann, oder dass die Halteeinrichtung (10) weiter
eine Bohrung (22) aufweist, an der der lösbare Axialanschlag (13) mit einer Befestigungseinrichtung (21) befestigbar ist.

2. Armatursicherung (9) nach Anspruch 1,
**dadurch gekennzeichnet,**
**dass** die Armaturaufnahme (17) als eine die Halteeinrichtung (10) vollständig durchdringende Öffnung ausgebildet ist, und dass die Verdrehsicherung (20) als diese Öffnung in Radialrichtung der Durchflussachse (25) begrenzender Rand ausgebildet ist, der insbesondere vieleckig oder gewellt ausgebildet ist, und der mit der Armatur des ersten Schlauchendes (11) wenigstens derart formschlüssig ineinander greifen kann, dass eine Rotation der Armatur des ersten Schlauchendes (11) in der Armaturaufnahme (17) verhindertwerden kann.

3. Armatursicherung (9) nach einem der vorhergehenden Ansprüche,
**dadurch gekennzeichnet,**
**dass** die Axialsicherung einen mit der Halteeinrichtung (10) einstückig ausgebildeten Axialanschlag (19) aufweist, an dem die Armatur des ersten Schlauchendes (11) in der Armaturaufnahme (17) anliegen kann und der eine Verschiebung der Armatur des ersten Schlauchendes (11) entlang einer Richtung der Durchflussachse (25) in der Armaturaufnahme (17) verhindern kann.

4. Armatursicherung (9) nach Anspruch 3,
dadurch gekennzeich net,
dass der Axialanschlag (19) als Verengung der Armaturaufnahme (17) entlang der Durchflussachse (25) ausgebildet ist, insbesondere als die Armaturaufnahme (17) innen zumindest teilweise und bevorzugt vollständig umlaufender Vorsprung.

5. Armatursicherung (9) nach einem der vorhergehenden Ansprüche,
**dadurch gekennzeichnet,**
**dass** der lösbare Axialanschlag (13) senkrecht zur Durchflussachse (25) in die Axialsicherungsaufnahme (18) einschiebbar ist.

6. Armatursicherung (9) nach einem der vorhergehenden Ansprüche,
**dadurch gekennzeichnet,**
**dass** der lösbare Axialanschlag (13) wenigstens eines der folgenden Merkmale aufweist:
- er umfasst einen Bolzen, der eine Bewegung der Armatur des ersten Schlauchendes (11) formschlüssig in einer Richtung der Durchflussachse (25) verhindern kann;
- er umfasst zwei Vorsprünge, mit denen der lösbare Axialanschlag (13) die Armatur des ersten Schlauchendes (11) zumindest teilweise, insbesondere wenigstens zur Hälfte des Umfanges der Armatur, umgreifen kann.

7. Armatursicherung (9) nach einem der vorhergehenden Ansprüche,
**dadurch gekennzeichnet,**
**dass** sie wenigstens eines der folgenden Merkmale umfasst:
- die Befestigungseinrichtung (21) ist eine Schraube;
- die Axialsicherungsaufnahme (18) ist als eine Vertiefung in Richtung der Durchflussachse (25) in der Halteeinrichtung (10) ausgebildet, wobei eine Sicherungshalterung (23) vorhanden ist, die an der Halteeinrichtung (10) befestigt ist und die den lösbaren Axialanschlag (13) in Richtung der Durchflussachse (25) formschlüssig in der Axialsicherungsaufnahme (18) hält;
- es sind zwei lösbare Axialanschläge (13) für die Armatur des ersten Schlauchendes (11) vorgesehen.

8. Armatursicherung (9) nach einem der vorhergehenden Ansprüche,
**dadurch gekennzeichnet,**
**dass** die Axialsicherung sowohl den mit der Halteeinrichtung (10) einstückig ausgebildeten Axialanschlag (19) gemäß Anspruch 3 und den lösbaren Axialanschlag (13) aufweist, wobei die Axialanschläge (13, 19) eine Verschiebung der Armatur des ersten Schlauchendes (11) entlang jeweils unterschiedlicher Richtungen der Durchflussachse (25) in der Armaturaufnahme (17) verhindern können, so dass die Armatur des ersten Schlauchendes (11) in beiden Richtungen entlang der Durchflussachse (25) gegen Verschiebungen gesichert werden kann.

9. Armatursicherung (9) nach einem der vorhergehenden Ansprüche,
**dadurch gekennzeichnet,**
**dass** die Halteeinrichtung (10) zur Aufnahme und Sicherung von mehreren Hydraulikschlauchkupplungen gleichzeitig ausgebildet ist, wobei die Durchflussachsen (25) der jeweiligen Hydraulikschlauchkupplungen insbesondere parallel zueinander angeordnet sind.

10. Armatursicherung (9) nach einem der vorhergehenden Ansprüche,
**dadurch gekennzeichnet,**
**dass** sie mehrere Halteeinrichtungen (10) umfasst, die formschlüssig komplementär zueinander ausgebildet und aneinander befestigbar sind, insbesondere derart, dass die Durchflussachsen (25) sämtlicher Hydraulikschlauchkupplungen parallel zueinander angeordnet werden können.

11. Baumaschine (1), insbesondere Boden- oder Müllverdichter oder Straßenfertiger, insbesondere mit einem Knickgelenk (24), wobei die Baumaschine (1) mit einer Armatursicherung (9) gemäß einem der vorhergehenden Ansprüche ausgestattet ist.

12. Baumaschine (1) nach Anspruch 11,
dadurch gekennzeich net,
dass die Armatursicherung (9) an der Antriebsvorbaugruppe angeordnet ist.

13. Verfahren (28) zur Herstellung einer Hydraulikschlauchkupplung einer Baumaschine (1) nach einem der Ansprüche 11-12, umfassend die Schritte:
a) Anbringen (29) einer Armatur an einem ersten Schlauchende (11) eines ersten Hydraulikschlauches,
b) Einlegen (30) der Armatur des ersten Schlauchendes (11) in die Armaturaufnahme (17) der Armatursicherung (9),
c) Sichern (31) der Armatur des ersten Schlauchendes (11) gegen eine Drehung in der Armaturaufnahme (17) der Armatursicherung (9),
d) Sichern (32) der Armatur des ersten Schlauchendes (11) gegen eine axiale Bewegung in der Armaturaufnahme (17) der Armatursicherung (9) bezogen auf eine Durchflussachse (25) der Hydraulikschlauchkupplung,
e) Anbringen (36) einer zur Armatur des ersten Schlauchendes (11) komplementären Armatur an einem zweiten Schlauchende (12) eines zweiten Hydraulikschlauches, und
f) Verbinden (33) der Armatur des ersten Schlauchendes (11) unmittelbar mit der Armatur des zweiten Schlauchendes (12).

14. Verfahren (28) nach Anspruch 13,
**gekennzeichnet durch**,
das Durchführen der Schritte a) bis d) an einer ersten Baugruppe (34),
das Durchführen des Schrittes e) an einer zweiten Baugruppe (35), und
das Verbinden der ersten und der zweiten Baugruppe (34, 35) **durch** Schritt f).

## Claims

1. A fitting securing device (9) for facilitated assembly and securing of hydraulic hose couplings, in particular for construction machines (1), with a holding device (10) comprising a fitting receptacle (17) for receiving a fitting of a first hose end (11),
wherein the holding device (10) includes an anti-rotation device (20) which is adapted to prevent rotation of the fitting of the first hose end (11) about a flow axis (25) in the fitting receptacle (17),
wherein the fitting securing device (9) includes an axial securing device which is adapted to prevent displacement of the fitting of the first hose end (11) along at least one direction of the flow axis (25) in the fitting receptacle (17),
wherein the fitting receptacle (17) penetrates the holding device (10) such that a fitting of a second hose end (12) can be coupled directly to the fitting of the first hose end (11) secured in the fitting receptacle (17), and
wherein the axial securing device includes a detachable axial stop (13) against which the fitting of the first hose end (11) can rest in the fitting receptacle (17) and which is adapted to prevent displacement of the fitting of the first hose end (11) along a direction of the flow axis (25) in the fitting receptacle (17),
**characterized in that**,
the holding device (10) further includes an axial securing device receptacle (18) which extends from an outside of the holding device (10) into the fitting receptacle (17), wherein the detachable axial stop (13) can be inserted into the axial securing device receptacle (18), so that the detachable axial stop (13) can at least partially engage behind a holding collar (16) of the fitting of the first hose end (11) located in the fitting receptacle (17) and can secure the fitting in a direction of the flow axis (25) in a form-locking manner, or
the holding device (10) further includes a bore (22) to which the detachable axial stop (13) can be fastened with a fastening device (21).

2. The fitting securing device (9) according to claim 1,
**characterized in that**,
the fitting receptacle (17) is configured as an opening completely penetrating the holding device (10), and that the anti-rotation device (20) is configured as an edge delimiting this opening in a radial direction of the flow axis (25), said edge in particular being configured polygonal or corrugated and can engage the fitting of the first hose end (11) in a form-locking manner at least such that a rotation of the fitting of the first hose end (11) in the fitting receptacle (17) can be prevented.

3. The fitting securing device (9) according to any one of the preceding claims,
**characterized in that**,
the axial securing device includes an axial stop (19) formed integrally with the holding device (10) against which the fitting of the first hose end (11) can rest in the fitting receptacle (17) and which can prevent displacement of the fitting of the first hose end (11) along a direction of the flow axis (25) in the fitting receptacle (17).

4. The fitting securing device (9) according to claim 3,
**characterized in that**,
the axial stop (19) is configured as a constriction of the fitting receptacle (17) along the flow axis (25), in particular as a projection which surrounds the fitting receptacle (17) at least partially and preferably completely on the inside.

5. The fitting securing device (9) according to any one of the preceding claims,
**characterized in that**,
the detachable axial stop (13) can be inserted into the axial securing device receptacle (18) perpendicularly to the flow axis (25).

6. The fitting securing device (9) according to any one of the preceding claims,
**characterized in that**,
the detachable axial stop (13) has at least one of the following features:
- it comprises a bolt which can prevent movement of the fitting of the first hose end (11) in a form-locking manner in a direction of the flow axis (25);
- it comprises two projections with which the detachable axial stop (13) can engage around the fitting of the first hose end (11) at least partially, in particular at least half the circumference of the fitting.

7. The fitting securing device (9) according to any one of the preceding claims,
**characterized in that**,
it comprises at least one of the following features:
- the fastening device (21) is a screw;
- the axial securing device receptacle (18) is configured as a recess in the direction of the flow axis (25) in the holding device (10), wherein a securing holder (23) is provided which is fastened to the holding device (10) and holds the detachable axial stop (13) in the axial securing device receptacle (18) in a form-locking manner in a direction of the flow axis (25);
- two detachable axial stops (13) are provided for the fitting of the first hose end (11).

8. The fitting securing device (9) according to any one of the preceding claims,
**characterized in that**,
the axial securing device includes both the axial stop (19) formed integrally with the holding device (10) according to claim 3 and the detachable axial stop (13), whereby the axial stops (13, 19) are respectively able to prevent the fitting of the first hose end (11) from being displaced along different directions of the flow axis (25) in the fitting receptacle (17), so that the fitting of the first hose end (11) can be secured against displacement in both directions along the flow axis (25).

9. The fitting securing device (9) according to any one of the preceding claims,
**characterized in that**,
the holding device (10) is configured to receive and secure multiple hydraulic hose couplings simultaneously, the flow axes (25) of the respective hydraulic hose couplings being arranged in particular parallel to one another.

10. The fitting securing device (9) according to any one of the preceding claims,
**characterized in that**,
it comprises multiple holding devices (10) which are configured complementary in a form-locking manner and can be fastened to one another, in particular such that the flow axes (25) of all hydraulic hose couplings can be arranged parallel to one another.

11. A construction machine (1), in particular a ground or landfill compactor or a road paver, in particular with an articulated joint (24), wherein the construction machine (1) is fitted with a securing device (9) according to any one of the preceding claims.

12. The construction machine (1) according to claim 11,
**characterized in that**,
the fitting securing device (9) is arranged on the drive pre-assembly group.

13. A method (28) for producing a hydraulic hose coupling of a construction machine (1) according to any one of claims 11 to 12, comprising the steps of:
a) attaching (29) a fitting to a first hose end (11) of a first hydraulic hose,
b) inserting (30) the fitting of the first hose end (11) into the fitting receptacle (17) of the fitting securing device (9),
c) securing (31) the fitting of the first hose end (11) against rotation in the fitting receptacle (17) of the fitting securing device (9),
d) securing (32) the fitting of the first hose end (11) against axial movement in the fitting receptacle (17) of the fitting securing device (9) with respect to a flow axis (25) of the hydraulic hose coupling,
e) attaching (36) a fitting complementary to the fitting of the first hose end (11) to a second hose end (12) of a second hydraulic hose, and
f) connecting (33) the fitting of the first hose end (11) directly to the fitting of the second hose end (12).

14. The method (28) according to claim 13,
**characterized by**,
performing steps a) to d) on a first assembly group (34),
performing step e) on a second assembly group (35), and
connecting the first and second assembly groups (34, 35) by step f).

## Revendications

1. Dispositif (9) de blocage de raccords pour un montage et une immobilisation facilités de raccords de flexibles hydrauliques, en particulier pour des engins de chantier (1), avec un dispositif de maintien (10) comprenant un logement (17) de raccord destiné à recevoir un raccord d'une première extrémité (11) de flexible,
dans lequel le dispositif de maintien (10) comporte un dispositif anti-rotation (20) qui est apte à empêcher la rotation du raccord de la première extrémité (11) de flexible autour d'un axe (25) d'écoulement dans le logement (17) du raccord,
dans lequel le dispositif (9) de blocage de raccords comporte un dispositif de blocage axial qui est apte à empêcher le déplacement du raccord de la première extrémité (11) de flexible le long d'au moins une direction de l'axe (25) d'écoulement dans le logement (17) du raccord, dans lequel le logement (17) du raccord pénètre dans le dispositif de maintien (10) de telle manière qu'un raccord d'une deuxième extrémité (12) de flexible peut être couplé directement avec le raccord de la première extrémité (11) de flexible fixé dans le logement (17) du raccord, et
dans lequel le dispositif de blocage axial comporte une butée axiale détachable (13) contre laquelle le raccord de la première extrémité (11) de flexible peut s'appuyer dans le logement (17) du raccord, et qui est apte à empêcher le déplacement du raccord de la première extrémité (11) de flexible dans une direction de l'axe d'écoulement (25) dans le logement (17) du raccord,
**caractérisé en ce que**
le dispositif de maintien (10) comporte en outre un logement axial (18) dans le disposi-tif de blocage qui s'étend, à partir d'une face extérieure du dispositif de maintien (10), dans le logement (17) du raccord, dans lequel la butée axiale détachable (13) peut être insé-rée dans le logement axial (18) dans le dispositif de blocage, de telle sorte que la butée axiale détachable (13) peut, au moins partiellement, s'engager derrière un collier (16) de maintien du raccord de la première extrémité (11) de flexible situé dans le logement (17) du raccord et peut assujettir le raccord dans une direction de l'axe d'écoulement (25) par une complémentarité de forme, ou
le dispositif de maintien (10) comprend en outre un perçage (22) auquel la butée axiale détachable (13) peut être assujettie avec un système d'attache (21).

2. Dispositif (9) de blocage de raccords selon la revendication 1,
**caractérisé en ce que**
le logement (17) du raccord est configuré sous la forme d'une ouverture pénétrant complètement le dispositif de maintien (10), et **en ce que** le dispositif anti-rotation (20) est configuré sous forme d'une bordure délimitant cette ouverture dans une direction radiale de l'axe d'écoulement (25), ladite bordure étant en particulier configurée de manière polygonale ou ondulée et pouvant s'emboîter avec le raccord de la première extrémité (11) de flexible par complémentarité de forme au moins de telle sorte qu'une rotation du raccord de la première extrémité (11) de flexible dans le logement (17) du raccord puisse être empêchée.

3. Dispositif (9) de blocage de raccords selon l'une quelconque des revendications précédentes, **caractérisée en ce que**
le dispositif de blocage axial comprend une butée axiale (19) formée d'un seul tenant avec le dispositif de maintien (10), contre laquelle le raccord de la première extrémité (11) de flexible peut s'appuyer dans le logement (17) du raccord et qui peut empêcher le dépla-cement du raccord de la première extrémité (11) de flexible dans une direction de l'axe d'écoulement (25) dans le logement (17) du raccord.

4. Dispositif (9) de blocage de raccord selon la revendication 3,
**caractérisé en ce que**
la butée axiale (19) est configurée sous forme d'un étranglement du logement (17) du raccord le long de l'axe d'écoulement (25), en particulier sous forme d'un épaulement qui entoure le logement (17) du raccord, au moins en partie, et de manière préférée totalement, sur la face intérieure.

5. Dispositif (9) de blocage de raccords selon l'une quelconque des revendications précédentes, **caractérisée en ce que**
la butée axiale détachable (13) peut être insérée dans le logement axial (18) du dispositif de blocage, de manière perpendiculaire à l'axe d'écoulement (25).

6. Dispositif (9) de blocage de raccords selon l'une quelconque des revendications précédentes, **caractérisée en ce que**
la butée axiale détachable (13) présente au moins l'une des caractéristiques suivantes:
- elle comprend un goujon qui peut empêcher le déplacement du raccord de la première extrémité (11) de flexible par complémentarité de forme dans une direction de l'axe d'écoulement (25);
- elle comprend deux saillies avec lesquelles la butée axiale détachable (13) peut s'engager autour du raccord de la première extrémité (11) de flexible, au moins en partie, et en particulier au moins la moitié de la circonférence du raccord.

7. Dispositif (9) de blocage de raccords selon l'une quelconque des revendications précédentes, **caractérisée en ce que**
il comprend au moins l'une des caractéristiques suivantes:
- le système d'attache (21) est une vis;
- le logement axial (18) dans le dispositif de blocage est configuré sous forme d'un évidement dans la direction de l'axe d'écoulement (25) dans le dispositif de maintien (10), dans lequel un étrier de fixation (23) est présent, qui est fixé au dispositif de maintien (10) et maintient la butée axiale détachable (13) dans le logement axial (18) du dispositif de blocage par complémentarité de forme dans une direction de l'axe d'écoulement (25);
- deux butées axiales détachables (13) sont présentes pour le raccord de la première extrémité (11) de flexible.

8. Dispositif (9) de blocage de raccords selon l'une quelconque des revendications précédentes, **caractérisée en ce que**
le dispositif de blocage axial comprend à la fois la butée axiale (19) formée d'un seul tenant avec le dispositif de maintien (10) selon la revendication 3, et la butée axiale détachable (13), grâce à quoi les butées axiales (13, 19) sont respectivement aptes à empêcher le raccord de la première extrémité (11) de flexible d'être déplacé dans différentes directions de l'axe d'écoulement (25) dans le logement (17) du raccord, de telle sorte que le raccord de la première extrémité (11) de flexible peut être sécurisé contre un déplacement dans les deux directions sur l'axe d'écoulement (25).

9. Dispositif (9) de blocage de raccords selon l'une quelconque des revendications précédentes, ca racté risée en ce que
le dispositif de maintien (10) est configuré pour recevoir et bloquer simultanément une pluralité de raccords de flexibles hydrauliques, les axes d'écoulement (25) des raccords de flexibles hydrauliques respectifs étant en particulier agencés parallèlement les uns avec les autres.

10. Dispositif (9) de blocage de raccords selon l'une quelconque des revendications précédentes, **caractérisée en ce que**
il comprend une pluralité de dispositifs de maintien (10) qui sont configurés complémentaires par liaison de formes et peuvent être liés les uns aux autres, en particulier de telle sorte que les axes d'écoulement (25) de tous les raccords de flexibles hydrauliques puissent être disposés parallèles entre eux.

11. Engin (1) de chantier, en particulier compacteur de sol ou compacteur de déchets, ou finisseur, en particulier avec un joint articulé (24), dans lequel l'engin (1) de chantier est équipé d'un dispositif de blocage (9) selon l'une quelconque des revendications précédentes.

12. Engin (1) de chantier selon la revendication 11,
**caractérisé en ce que**
le dispositif (9) de blocage de raccords est situé sur le sous-ensemble d'entraînement.

13. Procédé (28) de production d'un raccord de flexible hydraulique d'un engin (1) de chantier selon l'une quelconque des revendications 11 à 12, comprenant les étapes consistant à:
a) fixer (29) un raccord à une première extrémité (11) de flexible d'un premier flexible hydraulique,
b) insérer (30) le raccord de la première extrémité (11) de flexible dans le logement (17) du raccord du dispositif (9) de blocage de raccords,
c) maintenir (31) le raccord de la première extrémité (11) de flexible en empêchant une rotation dans le logement (17) du raccord du dispositif (9) de blocage de raccords,
d) maintenir (32) le raccord de la première extrémité (11) de flexible contre un mouvement axial dans le logement (17) du raccord du dispositif (9) en relation avec un axe d'écoulement (25) du raccord de flexible hydraulique,
e) fixer (36) un raccord complémentaire du raccord de la première extrémité (11) de flexible à une seconde extrémité (12) de flexible d'un second flexible hydraulique, et
f) raccorder (33) le raccord de la première extrémité (11) de flexible directement au raccord de la seconde extrémité (12) de flexible.

14. Procédé (28) selon la revendication 13,
**caractérisé par**,
la mise en œuvre des étapes a) à d) sur un premier bloc de montage (34),
la mise en oeuvre de l'étape e) sur un second bloc de montage (35), et
le raccordement du premier et du second blocs de montage (34, 35) par l'étape f).
